(19) Europäisches Patentamt

European Patent Office

Office européen des brevets

(11) **EP 1 729 425 A1**

(12) **EUROPEAN PATENT APPLICATION**

(43) Date of publication:
06.12.2006 Bulletin 2006/49

(51) Int Cl.:
*H04B 1/69* (2006.01)

(21) Application number: 05291171.6

(22) Date of filing: **31.05.2005**

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(71) Applicants:
• Mitsubishi Electric Information Technology Centre
Europe B.V.
1119 NS Schiphol Rijk (NL)
• MITSUBISHI DENKI KABUSHIKI KAISHA
Chiyoda-ku
Tokyo 100-8310 (JP)

(72) Inventors:
• Paquelet, Stéphane,
Mitsubishi Electric ITE
35708 Rennes Cedex 7 (FR)
• Bisiaux, Alexis,
Mitsubishi Electric ITE
35708 Rennes Cedex 7 (FR)

(74) Representative: Saint-Marc-Etienne, Christophe Andréas
Cabinet Le Guen & Maillet,
5, place Newquay,B.P. 70250
35802 Dinard Cedex (FR)

(54) **UWB receiver using sinusoidal pulses and analog correlation**

(57) The invention relates to a method for transmitting at least one sequence of Np pulses over Np time windows, each pulse being enclosed within a predetermined time chip Tc.

The method according to the invention includes a signal characterization step, in the course of which Np detection windows Dj (for j=1 to Np) encompassing predetermined time chips are examined by performing convolutions over said detection windows Dj of the received signal with at least a first and a second sinusoidal signal S1 and S2, by means of at least first and second filtering means LPF1 and LPF2.

The method according to the invention enables to limit the processing time and power needed for carrying out the characterization step, which only requires to examine detection windows defined by a signature of a transmitter by using sinusoidal signals, instead of mapping the whole pulse sequence by means of a correlation with expected pulses.

FIG.6

**Description**

The present invention relates to a method for transmitting data in a telecommunication system including at least one transmitter and one receiver, said transmitter being intended to transmit a signal formed by at least one sequence of Np pulses over Np time windows, each pulse being enclosed within a time chip whose position whithin its relevant time window is defined by a chip number.

So-called Ultra-Wide Band systems (further referred to as UWB systems) are currently studied with the aim of assessing their relevance for future wireless mobile communication techniques. In such a UWB system, each transmitter may be identified by a signature formed by the above-mentioned chip numbers, which signature is in itself quite sturdy and may thus be reliably and accurately communicated to all potential receivers.

The pulses used in UWB systems are very short, having for example a duration lower than 0,1 nanosecond, which offers to such systems bandwidths at least as large as 10 GigaHertz, entailing high flexibility and hence numerous possible applications for such systems.

The above-described signal may form a carrying signal on which information can be encoded by modulation of said carrying signal, for example by performing phase or amplitude modulation of one or more pulse sequences.

A major problem which hinders development of such systems lies in the identification, by a receiver, of relevant information carried by incoming signals. In the present state of the art, a signal characterization is often performed by the receiver by correlating a received signal delivered at the output of a receiving antenna, which received signal may be exclusively constituted by noise or, alternatively, may include an incoming carrying signal, with a gliding model of the waveform such a carrying signal should have. Such a gliding correlation enables to obtain an exhaustive knowledge of the received signal, by performing in effect a complete mapping of this signal, which will yield all useful information related, for example, to the phase or to the amplitude of this signal.

Unfortunately, this gliding correlation technique is not realistically applicable as such to the characterization of sequences of Np pulses lasting less than 0,1ns each and enclosed in time windows having each a width of roughly 100ns. In such an example, with for example Np=128 and a sampling interval of 10ps, the scanning of the whole duration of a pulse sequence would require $1{,}28.10^6$ successive pulse sequences for its completion and would then last 16 seconds, which is not acceptable.

It should be also be noted that, during the considerable time required for performing the characterization of a pulse sequence according to the gliding corrclation technique described above, communication conditions between the transmitter and the receiver may change, i.e. a communication channel between these devices may be altered, for example due to movements of one or both devices, in the course of a single signal characterization step, with adverse effects on the accuracy of the results yielded by said signal characterization step. The signal carrying the pulse sequences may even disappear before its characterization is completed.

The invention aims at solving the aforementioned problems, by providing a method for preprocessing data as described in the opening paragraph, which method includes at least one signal characterization step which may be carried out far more quickly and easily than currently used signal detection techniques.

Indeed, a method for transmitting data according to the opening paragraph is characterized according to the invention in that it includes at least one signal characterization step to be executed by said receiver, in the course of which Np detection windows encompassing the time chips defined by the chip numbers are to be examined in search of an expected pulse sequence by performing at least a first and a second window filtering step on first and second intermediate signals respectively representative of a multiplication between a first input signal and first and second shifting signals in phase quadrature with respect to each other, said first and second window filtering steps being intended to be performed simultaneously according to a same impulsional response corresponding to that of a window function having a predefined, non-zero gain value during a detection window and a close to zero value otherwise.

In the characterization step according to the invention, the received signal is not scanned exhaustively during the whole duration of an expected pulse sequence, as is done in the known gliding correlation technique. The scanning is instead restricted to selected portions of the expected pulse sequence. This restriction is a consequence of a difference in purpose between the detection step according to the invention and the detection steps already known in the art.

Indeed, a known characterization step performed by means of a gliding correlation over the whole duration of an expected pulse sequence aims at exhaustively mapping a received sequence, whereas the characterization step according to the invention only aims at producing signals whose values are representative of parameters of the received sequence such as its phase and amplitude. The whole duration of a single expected sequence may thus be scanned stepwise, each step having a duration of the order of 10ns in the same conditions as those described above, which means that the scanning of a duration of an expected sequence of Np=128 pulses will only require $1{,}28.10^3$ successive pulse sequences for its completion and would last 16 milliseconds, i.e. one thousand times less than according to the gliding correlation technique described above.

The invention is linked to an observation made by the inventors according to which, for the sole purpose of characterizing an incoming signal, i.e. for extracting from said signal values representative of essential intrinsic parameters of the incoming signal, such as the phase and amplitude of pulses possibly carried by said signal, an exhaustive mapping of the incoming signal is superfluous. The present invention thus enables to limit the processing time and power required for carrying out the characterization step by only scanning detection windows defined by the signature of the transmitter, which will have been communicated beforehand to the receiver.

The fact that, by virtue of the invention, the extraction of said signal values representative of essential intrinsic parameters of the incoming signal is done by means of a filtering process and does not require any integration of said incoming signal nor of signals derived therefrom, enables to use for this purpose simple electronic circuits, preferably constituted by passive components, whereas an integration process will generally require the use of more complex circuits including active components, which would hence be more power-consuming and more costly to manufacture. Moreover, carrying out the above described filtering steps will enable rejection of image frequencies otherwise likely to disturb the operation of downstream components such as multipliers. This rejection of image frequencies hence allows to simplify the design of such downstream components, which no longer have to integrate specific image frequency cancellation means.

According to a most advantageous embodiment of the invention, the first and second shifting signals are sinusoidal signals in phase quadrature with respect to each other.

The use of sinusoidal signals for detecting incoming pulse sequences instead of pulses having a form similar to that of the expected pulses may in itself appear quite surprising, since it goes against the so-called theory of coherent systems. Nevertheless, explanations given hereinafter will demonstrate the efficiency and the validity of the choice made by the inventors.

The fact that, according to this embodiment of the invention, the received signal is to be convoluted with sinusoidal signals enables a far more simple implementation of the characterization step as is done in the known art, where a gliding correlation requires to generate, at the receiver end, pulses having the same form as those to be detected, whereas sinusoidal signals may be generated by off-the-shelf oscillators well-known to any skilled in the art, any kind of later processing to be applied to such sinusoidal signals being also simplified for like reasons.

According to a particular embodiment of the window filtering process, the impulsional response of the first and second window filtering steps corresponds to that of a low-pass filter having an upper cut-off frequency essentially equal to the inverse of a width of a detection window, and a 20dB attenuation above this cut-off frequency.

Such an embodiment enables an easy, though approximated implementation of a window filtering by means of various well-known filtering techniques.

According to one of its hardware-oriented aspects, the invention also relates to a telecommunication system including at least one transmitter and one receiver, said transmitter being intended to transmit a signal formed by at least one sequence of Np pulses over Np time windows, each pulse being enclosed within a time chip whose position whithin its relevant time window is defined by a chip number, system in which the receiver includes signal characterization means intended to perform an examination of Np detection windows encompassing the time chips defined by the chip numbers in search of an expected pulse sequence, said characterization means including at least first and second window filtering means for filtering first and second intermediate signals respectively representative of a multiplication between a first input signal and first and second shifting signals in phase quadrature with respect to each other, said first and second window filtering means featuring a same impulsional response corresponding to that of a window function having a predefined, non-zero gain value during a detection window and a close to zero value otherwise.

According to a specific embodiment of this hardware-oriented aspect, the first and second window filtering means will advantageously feature a same impulsional response corresponding to that of a low-pass filter having an upper cut-off frequency essentially equal to the inverse of a width of a detection window.

Such an embodiment enables an easy, though approximated implementation of a filtering window having for width the width of a detection window. Though each of these filtering means may be build on the basis of a basic RC-filter featuring a 20dB attenuation above this cut-off frequency as considered at -3dB, variants of this embodiment may be build on the basis of an order-3 Chebyshev type II low-pass filter having a zero at the inverse of a width of a detection window, or on the basis of a Butterworth low-pass filter having a cut-off frequency equal to half the inverse of a width of a detection window and a 15dB attenuation above this cut-off frequency.

According to a particular embodiment of such a system, the characterization means further include at least third and fourth window filtering means for filtering third and fourth intermediate signals respectively representative of a multiplication between a second input signal and third and fourth shifting signals in phase quadrature with respect to each other, said third and fourth window filtering means also featuring a same impulsional response corresponding to that of a window function having a predefined, non-zero gain value during a detection window and a close to zero value otherwise, the characterization means also including a first quadrature phase shifter intended to multiply a signal received by the receiver with first and second primary signals in phase quadrature with respect to each other, and to deliver respectively resulting first and second input signals to second and third quadrature phase shifters, which are to respectively deliver the first and second intermediate signals, on the one hand, and the third and fourth intermediate signals, on the other hand.

The characterization means may advantageously further include fifth and sixth filtering means arranged between the first quadrature phase shifter and the second and third quadrature phase shifters, respectively.

The presence of two successive filtering stages instead of a single one provides additional degrees of freedom for designing each of the low-pass filtering means, on the one hand, and the optional fifth and sixth filtering means.

According to a possible embodiment, the fifth and sixth filtering means may feature a same impulsional response corresponding to that of a low-pass filter having an upper cut-off frequency essentially equal to twice the inverse of a width of a detection window.

According to another possible embodiment, the fifth and sixth filtering means may feature a same impulsional response corresponding to that of a band-pass filter having a centre frequency essentially equal to the inverse of a width of a detection window and a bandwidth essentially equal to the value of said centre frequency.

According to a specific embodiment of the invention, the characterization means further may include:

- an oscillator intended to generate an output signal from which the first and second primary signals of the first quadrature phase shifter will be derived, and
- a frequency divider intended to receive said output signal and to deliver respective first, second, third an fourth shifting signals to the second and third quadrature phase shifters.

According to such an embodiment of the invention, the frequency of the first and second primary signals will have a value which will be an integer multiple of the frequency of the shifting signals, which enables to use only one oscillator at the receiving end for performing a characterization of an incoming pulse sequence.

According to a preferred embodiment of the invention, the receiver comprised in a system as described above further includes:

- a plurality of accumulating modules, each of which being intended to accumulate output values delivered by one of said window filtering means,
- a plurality of squaring modules, each of which being intended to produce a squared value of the contents of one of said accumulating modules, and
- an additioner intended to compute a sum of output values delivered by the squaring modules in order to produce a detection value which will be compared to the predetermined threshold value.

According to another of its hardware-oriented aspects, the invention also relates to a telecommunication apparatus intended to receive a signal formed by at least one sequence of Np pulses over Np time windows, each pulse being enclosed within a time chip whose position whithin its relevant time window is defined by a chip number, which apparatus includes signal characterization means intended to perform an examination of Np detection windows encompassing the time chips defined by the chip numbers in search of an expected pulse sequence, said characterization means including at least first and second window filtering means for filtering first and second intermediate signals respectively representative of a multiplication between a first input signal and first and second shifting signals in phase quadrature with respect to each other, said first and second window filtering means featuring a same impulsional response corresponding to that of a window function having a predefined, non-zero gain value during a detection window and a close to zero value otherwise.

According to yet another of its hardware-related aspects, the invention also relates to a signal processing device intended to receive a signal formed by at least one sequence of Np pulses over Np time windows, each pulse being enclosed within a time chip whose position whithin its relevant time window is defined by a chip number, which device is intended to perform an examination of Np detection windows encompassing the time chips defined by the chip numbers in search of an expected pulse sequence, said device including at least first and second window filtering means for filtering first and second intermediate signals respectively representative of a multiplication between a first input signal and first and second shifting signals in phase quadrature with respect to each other, said first and second window filtering means featuring a same impulsional response corresponding to that of a window function having a predefined, non-zero gain value during a detection window and a close to zero value otherwise.

The characterization means included in the above described apparatus and processing device will thus be able to execute a signal characterization step according to the above-described embodiments of the invention.

The characteristics of the invention mentioned above, as well as others, will emerge more clearly from a reading of the following description given in relation to the accompanying figures, amongst which:

Fig.1 is a functional diagram depicting a telecommunication system in which the invention is used;
Fig.2 is a chronogram depicting a pulse sequence constituting a carrying signal transmitted in such a telecommunication system;
Fig.3 is a chronogram depicting a pulse model which may be used for generating such a sequence;

Fig.4 is a chronogram depicting a data frame including a pluralty of pulse sequences;

Fig.5 is a chronogram depicting a signal characterization step according to the invention;

Fig.6 is a block diagram depicting signal detection means making use of a pre-processing device according to a possible embodiment of the invention; and

Fig.7 is a block diagram depicting a pre-processing device according to a preferred embodiment of the invention.

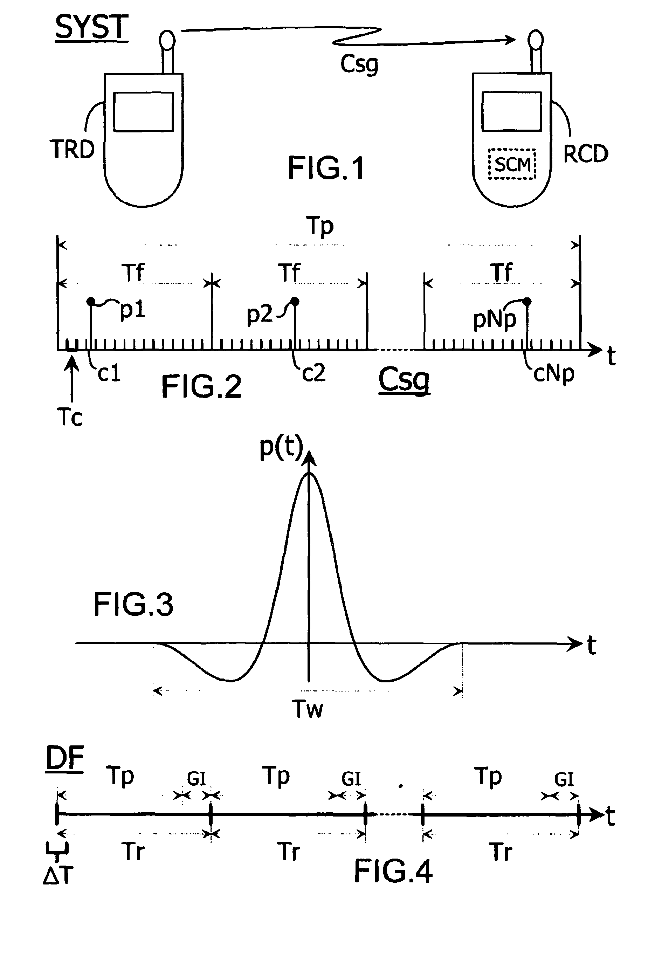

**Fig.1** depicts a telecommunication system SYST in which the invention is embodied. This system SYST includes at least one transmitting apparatus TRD and one receiving apparatus RCD, which may for example be constituted by mobile phones. The transmitting apparatus TRD is intended to transmit a signal Csg formed by at least one sequence of Np pulses pj (for j=1 to Np) over Np time windows, each pulse being enclosed within a time chip whose position whithin its relevant time window is defined by a chip number cj (for j=1 to Np).

The receiving apparatus RCD is provided with characterization means SCM for characterizing such an incoming signal Csg, i.e. for deriving from said signal Csg other signals whose values are representative of essential intrinsic parameters of the incoming signal Csg, such as the phase and amplitude of pulses possibly carried by said signal Csg, which characterization means SCM may also be additionnally used for detecting pulse sequences carried by the incoming signal Csg.

This signal Csg may form a carrying signal on which information can be encoded by the transmitting apparatus TRD by means of a modulation of said carrying signal Csg, for example by performing phase or amplitude modulation of one or more pulse sequences.

**Fig.2** depicts such a carrying signal Csg in the form of a chronogram, according to which each pulse sequence has a total duration duration Tp divided into time windows having each a duration Tf, each time window being sub-devided into time chips Tc, a single time chip within each window being intended to enclose a pulse pj (for i=1 to Np), which single time chip is identified by means of a chip number cj. The transmitter of this carrying signal Csg will thus be identified by a signature Sg=(c1, c2...cNp) jointly formed by all above-mentioned chip numbers cj (for i=1 to Np), which signature Sg is in itself quite sturdy and may thus be reliably and accurately communicated to all potential receivers.

**Fig.3** is another chronogram which depicts a possible shape p(t) which may be chosen for constituting the above-mentioned pulses. In the example depicted here, this pulse p(t) is defined as a derivative of the second order of a Gaussian function, which may be expressed mathematically as $p(t)=A.[1-4\pi(t/Tw)^2.exp(-2\pi(t/Tw)^2)$. Other pulse shapes known to those skilled in the art may, of course, be used in this same purpose.

**Fig.4** is yet another chronogram which depicts a data frame DF formed by successive pulse sequences such as the one described above, each having a total duration Tp, a guard interval GI being periodically inserted between two such sequences in order to prevent alteration of a given sequence by a following one, which alterations could be caused, for example, by intermodulation products between said pulse sequences. This dataframe DF is thus constituted by successive frames having each a duration Tr, whith Tr=Tp+GI, and including each a pulse sequence as described above.

A device intended to receive a data frame DF must thus be able to detect the beginning of a pulse sequence such as those described above during a given time interval $\Delta T$.

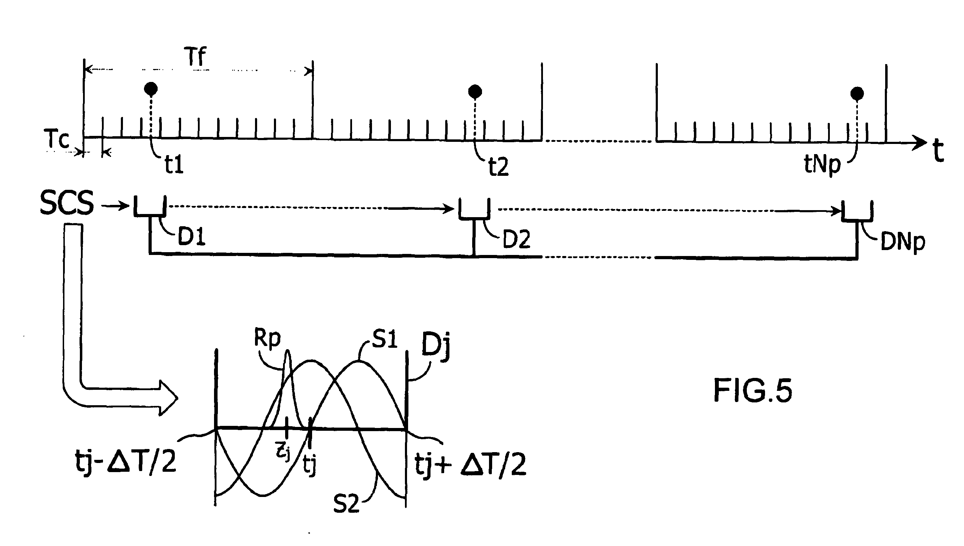

**Fig.5** depicts how such a pulse sequence may advantageously be detected by a device intended to receive this sequence. According to the present invention, such a device will carry out a signal characterization step SCS in the course of which Np detection windows Dj (for j=1 to Np) encompassing the time chips defined by the chip numbers are to be examined in search of pulses belonging to an expected pulse sequence, which pulses are shown in dashed lines in this Figure. Each detection window Dj (for j=1 to Np) is wider than a single time chip duration Tc, and has a duration $\Delta T$, which means that carrying out the detection step SCS depicted here amounts to providing an answer to a problem consisting for a receiving device in determining if a pulse sequence transmitted under a known signature and intended to be received by said device has or not started during a given time interval $\Delta T$.

The method according to the invention only requires to scan selected time windows Dj centered on moments tj (for j=1 to Np) defined by their respective associated chip numbers, in search of expected pulses.

This enables to determine in a single step if a given pulse sequence starts or not within a given time interval $\Delta T$, whereas in the known detection technique, such a statement may only be established after performing numerous elementary correlations for achieving an exhaustive scanning of the whole duration Tp of said given sequence.

A possible way of carrying out the scanning of the detection windows Dj according to the invention is also shown in this Figure. Each detection window Dj is centered on a given instant tj and defined by lower and upper bounds respectively equal to tj-$\Delta T$/2 and tj+$\Delta T$/2. In this example, a detection value is computed as a mean value over all detection windows of a first and a second correlation between the received signal and a first and second sinusoidal signal S1 and S2, respectively, which first and second sinusoidal signals S1 and S2 are in phase quadrature with each other. This detection value will then be compared to a predetermined threshold value.

The efficiency of the method according to the invention is based on the following observation : since the width of a received pulse Rp occuring at an instant $\tau_j$ is far smaller than that of a detection window Dj, a correlation between the received signal and a sinusoidal signal, for example a first sinusoidal signal S1 expressed as sin($2\pi t/\Delta T$), which correlation is defined as

$$\int_{\frac{\Delta T}{2}}^{\frac{\Delta T}{2}} p(t-\tau)\sin(\frac{2\pi t}{\Delta T})dt$$

may be expressed as

$$\sin(\frac{2\pi\tau}{\Delta T}) \cdot \int_{\frac{\Delta T}{2}}^{\frac{\Delta T}{2}} p(t)dt \; ,$$

$$\text{with } \int_{\frac{\Delta T}{2}}^{\frac{\Delta T}{2}} p(t)dt = \alpha \; ,$$

where $\alpha$ is proportional to the energy carried by the pulse Rp.

The first and second correlation values, noted Cs1 and Cs2 produced by correlating over the detection windows Dj the received signal with the first and second sinusoidal signals S1 and S2 may thus be expressed as :

$$\begin{cases} \alpha.\sin(\dfrac{2\pi\tau}{\Delta T}) = Cs1 \\ \alpha.\cos(\dfrac{2\pi\tau}{\Delta T}) = Cs2 \end{cases} ,$$

which will constitute an easily solvable equation system once the correlation values Cs1 and Cs2 will have been measured.

An accumulation of multiple successive correlations performed between the received signal and one of the first and second sinusoidal signals S1 and S2 will preferably be squared so as to emphasize occurrences where a received pulse Rp is indeed present within detection window Dj, with respect to freak occurrences where a noise peak may produce a significant value of the scalar product described above, the amplitude of such a noise peak being lower than that of an actually received pulse Rp.

Due to the very nature of the pulse sequences to be detected, a time delay between an instant $\tau_j$ of occurrence of a pulse Rp and the predetermined instant tj will be caused by a phase-shift affecting the whole sequence, so that this time delay tj-$\tau$j will have a constant value for all time windows. This will entail that an accumulation of the correlation values for all detection windows will automatically enable an in-phase addition of the received pulses, and thus an amplification of the impact of these pulses, simultaneously with an attenuation of the impact of freak pulses due to irrelevant noise, provided that the width $\Delta T$ of a detection window Dj is an integer multiple of the period of the first and second sinusoidal signals S 1 and S2.

The inventors have furthermore observed that the use of a squared correlation value also enables to simplify the emplementation of a signal detection step in the course of which only an information representative of the energy carried by the incoming signal has to be computed.

Indeed, since $\alpha^2.\cos^2(2\pi\tau/\Delta T)+\alpha^2.\sin^2(2\pi\tau/\Delta T)=\alpha^2$, a sum of the results of the above described squared correlations will yield a detection value representative of the energy carried by the received signal.

Computing correlations such as those described above usually require the use of intergrators formed by complex active electronic circuits, which arc costly to manufacture and require a constant power supply. Moreover, such integrators usually require a very accurate management of charges and discharges of capacitors, which is very difficult to perform at operating frequencies of the order of the GigaHertz. The inventors have found that these correlations may be rewritten as convolutions of the same signals with the impulsional response, hereinafter noted h2, of a low-pass filter having a cut-off frequency 1/ΔT essentially equal to the inverse of the width of a detection window.

Accordingly, Cs1 and Cs2 may thus be expressed as:

$$Cs1 = \int_{-\frac{\Delta T}{2}}^{\frac{\Delta T}{2}} p(t - \tau) \sin(\frac{2\pi t}{\Delta T}) dt = [h2 * (p(.-\tau).\sin(2\pi./\Delta T))](\Delta T/2)$$

and

$$Cs2 = \int_{-\frac{\Delta T}{2}}^{\frac{\Delta T}{2}} p(t - \tau) \cos(\frac{2\pi t}{\Delta T}) dt = [h2 * (p(.-\tau).\cos(2\pi./\Delta T))](\Delta T/2)$$

where h2(t)=1 when t is included within [-ΔT/2 ; +ΔT/2] and 0 otherwise.

This novel development identified by the inventors will enable a relatively simple and cost-efficient implementation of the means required for carrying out the characterization step described above, since it allows to dispense with active integrating circuits.

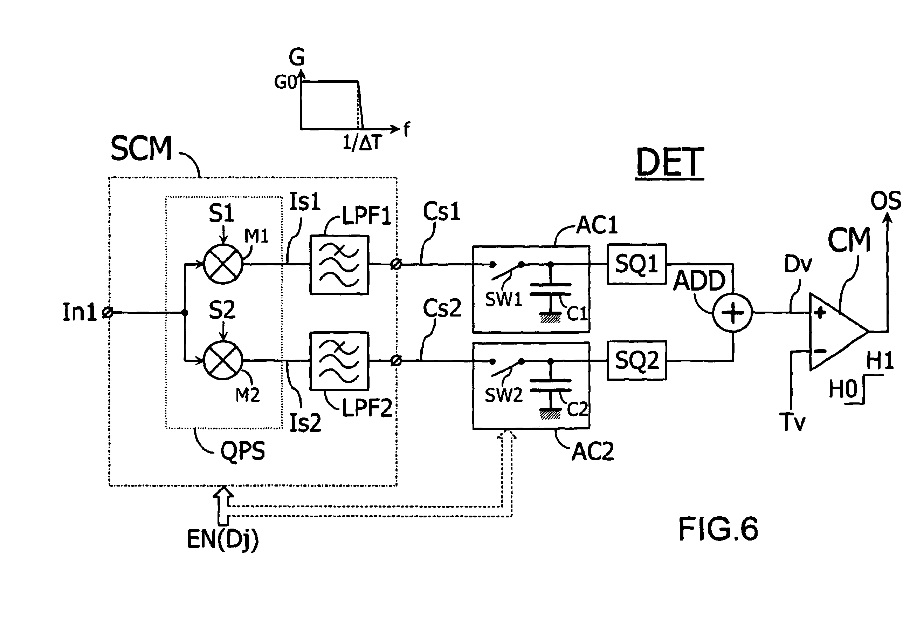

**Fig.6** schematically shows detection means DET including signal characterization means SCM intended to implement the above described characterization step, in order to produce a detection value Dv, which is to be compared to a threshold value Tv by comparison means CM which may be formed by a simple operational amplifier intended to deliver a two-state output signal OS whose value will determine whether an incoming pulse has been detected or not.

The received signal Y will be deemed corresponding to a state H1 in which a pulse sequence is actually carried by said signal Y, if Dv exceeds a predetermined threshold value noted Tv, the received signal Y being deemed corresponding to a state H0 in which only noise is actually carried by said signal Y, if Dv<Tv.

In the example shown here, the characterization means SCM include a quadrature phase shifter formed in this example by a first and a second signal multipliers M1 and M2, for example constituted by Gilbert cells, intended to multiply an input signal In1 with a first and a second sinusoidal shifting signal S1 and S2, respectively, with S1=sin(2πt/ΔT) and S2=cos(2πt/ΔT). Such a choice enables the first and second signal multipliers M1 and M2 to perform phase shifts having 0° and 90° for respective amounts. The characterization means SCM further include first and second low-pass filters LPF1 and LPF2, intended to simultaneously perform a filtering of intermediate signals Is1 and Is2 outputted by the first and second signal multipliers M1 and M2, and thus to deliver convoluted signals Cs1 and Cs2, respectively resulting from convolutions performed by applying the low-pass impulsional response of filters LPF1 and LPF2 to multiplications of the first input signal Y1 with the first sinusoidal signal S1, on the one hand, and with the second sinusoidal signal S2, on the other hand.

As shown in this example the low-pass filters LPF1 and LPF2 feature a same impulsional response roughly corresponding to that of a window function having a predefined gain value G0 during a detection window ΔT and a close to zero value otherwise. Each of these filters LPF1 and LPF2 may be build on the basis of a basic RC-filter featuring a 20dB attenuation above its cut-off frequency 1/ΔT as considered at -3dB, variants of this embodiment may be build on the basis of an order-3 Chebyshev type II low-pass filter having a zero at the inverse of a width of a detection window, or on the basis of a Butterworth low-pass filter having a cut-off frequency equal to half the inverse of a width of a detection window ΔT and a 15dB attenuation above this cut-off frequency 1/(2.ΔT).

In the embodiment described here, the first and second signal mutlipliers M1 and M2 are to be activated by means of an activation signal EN(Dj) only during the detection windows Dj, which may for example be performed by connecting said signal multipliers to their power supply or to an input terminal intended to receive the input signal Y1 only during said detections windows Dj, which entails that the first and second convolution means formed by the respective assemblies of the first and second signal multipliers M1 and M2 with the first and second low-pass filters LPF1 and LPF2 will be disabled outside of the detection windows Dj. A same result may be obtained in other embodiments by similarly controlling a switch linking respective outputs of the low-pass filters LPF1 and LPF2 to accumulating capacitors C1 and C2 included in analog accumulating modules AC1 and AC2 intended to accumulate the values featured by the convoluted signals Cs1 and Cs2 during successive detections windows Dj in the example described here. In the present embodiment of the invention, the detection means DET further include first and second squaring modules SQ1 and SQ2, respectively intended to produce a squared value of the contents of the first and second accumulating modules AC1 and AC2, which squared values are then to be added together by an additioner ADD also included in the detection means DET shown here, and intended to output a detection value Dv which will be proportional to the energy carried by the received signal Y, as explained hereinbefore.

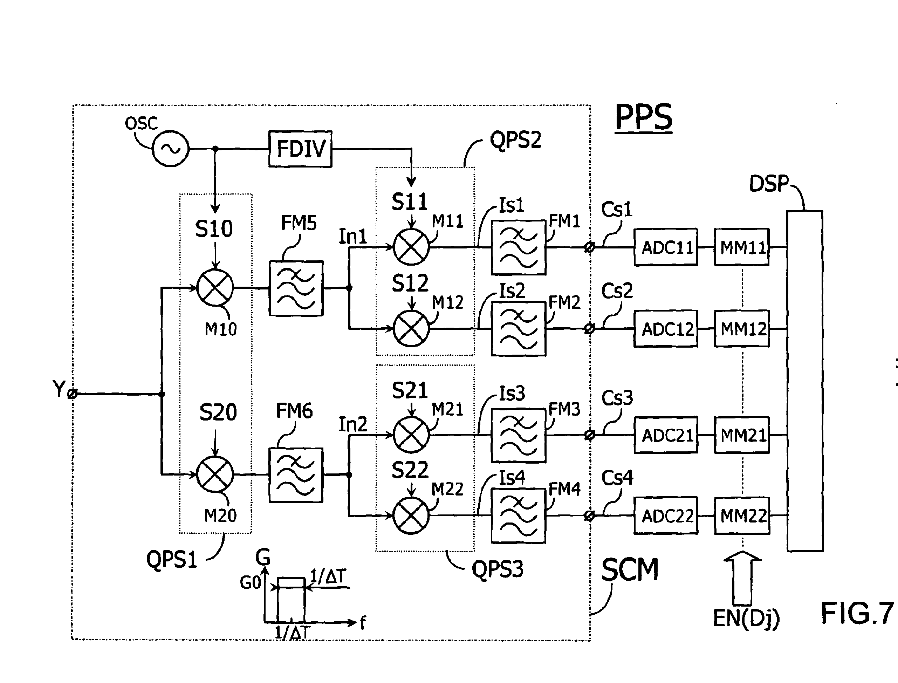

**Fig.7** schematically shows a signal pre-processing stage PPS comprising signal characterization means SCM according to another embodiment of the invention, which signal characterization means SCM include a first quadrature phase shifter QPS1 intended to be fed with a signal Y2, for example a signal received by the receiver through an antenna followed by a low-noise amplifier, and to deliver first and a second input signals In1 and In2 to second and third quadrature phase shifters QPS2 and QPS3, respectively connected to first and second low-pass filtering means (FM1) and (FM2), on the one hand, and to third and fourth low-pass filtering means (FM3) and (FM4), on the other hand.

The first., second, third and fourth low-pass filtering means (FM1), (FM2), (FM3) and (FM4) are respectively followed by first, second, third and fourth analog-to-digital converting modules ADC11, ADC12, ADC21 and ADC22, themselves followed by first, second, third and fourth memory modules MM11, MM12, MM21 and MM22, the outputs of which being connected to a digital signal processor DSP intended to process the information stored in the memory modules according to predetermined schemes defined by software which will have been previously loaded and memorized within the digital signal processor DSP.

This highly schematical diagram enables to show the very wide range of use of the invention, since, once converted into digital data, the results of the convolutions performed by the characterization means SCM may be submitted to any kind of treatment by the digital signal processor DSP.

Another advantage of the invention is also visible here: indeed, as explained above, the invention enables to extract all significant information from the received signal Y without requiring a mapping of said signal. It is apparent from this drawing that the invention also enables to convert into digital data all significant information pertaining to the received signal Y without having to sample said signal in the usual sense. The resulting advantage lies in a reduction of the number of samples required for a same effect: according to a traditionnal Shannon sampling technique, and given the bandwidth of the pulse sequences (roughly 7GHz) and the width of the detection windows (roughly 2ns), around 30 sampled values would be necessary for correctly sampling each detection window, whereas the invention enables to reduce the number of usable scalar values to the four values outputted by the signal characterization means SCM, which amounts to reduce the total number of samples by an order of magnitude, and will enable to save storage resources and costs in the same proportion.

It should also be noted that, since this embodiment of the invention produces four scalar values, it will enable to solve a system of four equations with four unknown parameters, which allows to use this embodiment for characterizing two overlapping pulse sequences simultaneously carried by a same received signal Y.

Besides, in a case where multiple pulse sequences or pairs of pulse sequences are carried on multiple sub-bands, a parallel array consisting of multiple signal characterization means SCM such as those previously described may advantageously be used for characterizing said multiple pulse sequences or pairs of pulse sequences.

In the embodiment of the invention shown here, the first quadrature phase shifter QPS1 includes two signal multipliers M10 and M20 intended to be fed with the received signal Y, on the one hand, and by sinusoidal shifting signals S 10 and S20 in phase quadrature with each other and having a so-called primary frequency Fp.

The primary frequency Fp is usually chosen in the art as equal to a median frequency for a spectral distribution of the energy carried by the incoming pulse sequences. If, for example, these pulse sequences feature a frequency varying from 3 to 5 GHz, the primary frequency Fp may be chosen close to 4 GHz.

In the embodiment shown here, the characterization means SCM further include:

an oscillator OSC intended to generate an output signal from which the sinusoidal shifting signals S10 and S20 of the first quadrature phase shifter QPS1 will be derived, and
. a frequency divider FDIV intended to receive said output signal and to deliver respective sinusoidal shifting signals (S11, S12) and (S21, S22) to the second and third quadrature phase shifters QPS2 and QPS3, respectively.

Such an embodiment of the invention thus enables to obtain optimal clock stability by using a single oscillator OSC at the receiving end.

In other embodiments of the invention, one may also choose to use a low-frequency oscillator for producing the sinusoidal shifting signals (S11, S12) and (S21, S22) of the second and third quadrature phase shifters QPS2 and QPS3, and to use a frequency multiplier for producing the sinusoidal shifting signals S10 and S20 of the first quadrature phase shifter QPS 1 on the basis of the signals outputted by such a low-frequency oscillator.

In the example described here, the characterization means SCM further include optional fifth and sixth filtering means FM5 and FM6 arranged between the first quadrature phase shifter QPS1 and the second and third quadrature phase shifters QPS2 and QPS3, respectively.

These fifth and sixth filtering means FM5 and FM6 may feature a same impulsional response h1 corresponding to that of a low-pass filter having an upper cut-off frequency $1/\Delta T$ essentially equal to the inverse of a width $\Delta T$ of a detection window.

Alternatively, the fifth and sixth filtering means FM5 and FM6 may feature a same impulsional response h1 corresponding to that of a band-pass filter having a centre frequency $1/\Delta T$ essentially equal to the inverse of a width AT of a detection window and a bandwidth essentially equal to the value of said centre frequency 1/ΔT.

By way of example, if 1/ΔT=500MHz, the bandwidth of such a bandpass filter will range from 250MHz to 750MHz.

In such an embodiment of the invention a convolution signal Cs1 may then be expressed as:

$$Cs1 = \int_{\frac{\Delta T}{2}}^{\frac{\Delta T}{2}} p(t-\tau)\sin(2\pi Fp)\sin(\frac{2\pi t}{\Delta T})dt =$$
$$\left\{ h2 * \left( [h1 * (p(.-\tau).\sin(2\pi Fp./\Delta T))].\sin(2\pi./\Delta T)) \right\}(\Delta T/2)$$

the presence of two successive filtering stages instead of a single one providing additional degrees of freedom for designing each of the low-pass filtering means FM1, FM2, FM3 and FM4, on the one hand, and the optional fifth and sixth filtering means FM5 and FM6.

It seems worthy of notice that the embodiment of the signal characterization means SCM shown in Fig.6 may be considered as a particular analog application of the embodiment of the signal characterization means SCM shown in Fig.7, for which a primary frequency Fp equal to 0 will have been chosen, which means, in other terms, that the embodiment shown in Fig.6 is well-suited for baseband applications.

**Claims**

1. A method for transmitting data in a telecommunication system including at least one transmitter and one receiver, said transmitter being intended to transmit a signal formed by at least one sequence of Np pulses over Np time windows where Np is a predermined integer number, each pulse being enclosed within a time chip whose position whithin its relevant time window is defined by a chip number, which method includes at least one signal characterization step to be executed by said receiver, in the course of which Np detection windows encompassing the time chips defined by the chip numbers are to be examined in search of an expected pulse sequence by performing at least a first and a second window filtering step on first and second intermediate signals respectively representative of a multiplication between a first input signal and first and second shifting signals in phase quadrature with respect to each other, said first and second window filtering steps being intended to be performed simultaneously according to a same impulsional response corresponding to that of a window function having a predefined, non-zero gain value during a detection window and a close to zero value otherwise.

2. A method as claimed in claim 1, according to which the first and second shifting signals arc sinusoidal signals in phase quadrature with respect to each other.

3. A method as claimed in claim 1, according to which the impulsional response of the first and second window filtering steps corresponds to that of a low-pass filter having an upper cut-off frequency essentially equal to the inverse of a width of a detection window.

4. A telecommunication system including at least one transmitter and one receiver, said transmitter being intended to transmit a signal formed by at least one sequence of Np pulses over Np time windows, each pulse being enclosed within a time chip whose position whithin its relevant time window is defined by a chip number, system in which the receiver includes signal characterization means intended to perform an examination of Np detection windows encompassing the time chips defined by the chip numbers in search of an expected pulse sequence, said characterization means including at least first and second window filtering means for filtering first and second intermediate signals respectively representative of a multiplication between a first input signal and first and second shifting signals in phase quadrature with respect to each other, said first and second window filtering means featuring a same impulsional response corresponding to that of a window function having a predefined, non-zero gain value during a detection window and a close to zero value otherwise.

5. A telecommunication system as claimed in claim 4, in which the first and second window filtering means feature a same impulsional response corresponding to that of a low-pass filter having an upper cut-off frequency essentially equal to the inverse of a width of a detection window.

6. A telecommunication system as claimed in claim 3, in which the characterization means further include at least third and fourth window filtering means for filtering third and fourth intermediate signals respectively representative of a multiplication between a second input signal and third and fourth shifting signals in phase quadrature with respect to each other, said third and fourth window filtering means also featuring a same impulsional response corresponding to that of a window function having a predefined, non-zero gain value during a detection window and a close to zero value otherwise, the characterization means also including a first quadrature phase shifter intended to multiply a signal received by the receiver with first and second primary signals in phase quadrature with respect to each other, and to deliver respectively resulting first and second input signals to second and third quadrature phase shifters, which are to respectively deliver the first and second intermediate signals, on the one hand, and the third and fourth intermediate signals, on the other hand.

**7.** A telecommunication system as claimed in claim 6, in which the characterization means further include fifth and sixth filtering means arranged between the first quadrature phase shifter and the second and third quadrature phase shifters, respectively.

**8.** A telecommunication system as claimed in claim 7, in which the fifth and sixth filtering means feature a same impulsional response corresponding to that of a low-pass filter having an upper cut-off frequency essentially equal to twice the inverse of a width of a detection window.

**9.** A telecommunication system as claimed in claim 7, in which the fifth and sixth filtering means feature a same impulsional response corresponding to that of a band-pass fitter having a centre frequency essentially equal to the inverse of a width of a detection window and a bandwidth essentially equal to the value of said centre frequency.

**10.** A telecommunication system as claimed in any one of claims 7 to 9, in which the characterization means further include:

. an oscillator intended to generate an output signal from which the first and second primary signals of the first quadrature phase shifter will be derived, and
. a frequency divider intended to receive said output signal and to deliver respective first, second, third an fourth shifting signals to the second and third quadrature phase shifters.

**11.** A telecommunication system as claimed in any one of claims 4 to 10, in which the receiver further includes:

. a plurality of accumulating modules, each of which being intended to accumulate output values delivered by one of said window filtering means,
. a plurality of squaring modules, each of which being intended to produce a squared value of the contents of one of said accumulating modules, and
. an additioner intended to compute a sum of output values delivered by the squaring modules in order to produce the detection value to be compared to the predetermined threshold value.

**12.** A telecommunication apparatus intended to receive a signal formed by at least one sequence of Np pulses over Np time windows, each pulse being enclosed within a time chip whose position whithin its relevant time window is defined by a chip number, which apparatus includes signal characterization means intended to perform an examination of Np detection windows encompassing the time chips defined by the chip numbers in search of an expected pulse sequence, said characterization means including at least first and second window filtering means for filtering first and second intermediate signals respectively representative of a multiplication between a first input signal and first and second shifting signals in phase quadrature with respect to each other, said first and second window filtering means featuring a same impulsional response corresponding to that of a window function having a predefined, non-zero gain value during a detection window and a close to zero value otherwise.

**13.** A signal processing device intended to receive a signal formed by at least one sequence of Np pulses over Np time windows, each pulse being enclosed within a time chip whose position whithin its relevant time window is defined by a chip number, which device is intended to perform an examination of Np detection windows encompassing the time chips defined by the chip numbers in search of an expected pulse sequence, said device including at least first and second window filtering means for filtering first and second intermediate signals respectively representative of a multiplication between a first input signal and first and second shifting signals in phase quadrature with respect to each other, said first and second window filtering means featuring a same impulsional response corresponding to that of a window function having a predefined, non-zero gain value during a detection window and a close to zero value otherwise.

SYST

FIG.1

TRD

Csg

SCM | RCD

Tp

Tf | Tf | Tf

p1 | p2 | pNp

c1 | c2 | cNp

Csg

FIG.2

Tc

p(t)

FIG.3

Tw

DF

Tp | GI | Tp | GI | . | Tp | GI

Tr | Tr | FIG.4 | Tr

ΔT

FIG.5

FIG.6

EP 1 729 425 A1

FIG.7

**European Patent Office**

## EUROPEAN SEARCH REPORT

Application Number

EP 05 29 1171

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HAN HUANG ET AL: "The structure and performance on an orthogonal sinusoidal correlation receiver of impulse radio" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1192-1196, XP010786811 ISBN: 0-7803-8521-7 * figures 4,5 * Section III.: Principle ----- | 1-13 | H04B1/69 |
| Y | ANDREAS F. MOLISCH ET AL.: "A low-cost time-hopping impulse radio system for high data rate transmission"[Online] 8 October 2003 (2003-10-08), pages 1-21, XP002352285 Retrieved from the Internet: URL:http://www.princeton.edu/~sgezici/Journal_EURASIP/eurasip8.pdf> [retrieved on 2005-11-02] * figure 6 * * page 11 * ----- -/-- | 1-13 | |

TECHNICAL FIELDS SEARCHED (IPC)

H04B

The present search report has been drawn up for all claims

| Place of search | Date of completion of the search | Examiner |
|---|---|---|
| Berlin | 4 November 2005 | Chave, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**European Patent Office**

**EUROPEAN SEARCH REPORT**

Application Number

EP 05 29 1171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MOLISCH A F ET AL INSTITUTE OF ELECTRICAL AND ELECTRONICS ENGINEERS: "Time hopping and frequency hopping in ultrawideband systems" 2003 IEEE PACIFIC RIM CONFERENCE ON COMMUNICATIONS, COMPUTERS AND SIGNAL PROCESSING. (PACRIM 2003). VICTORIA, BC, CANADA, AUG. 28 - 30, 2003, IEEE PACIFIC RIM CONFERENCE ON COMMUNICATIONS, COMPUTERS AND SIGNAL PROCESSING. PACRIM, NEW YORK, NY : IEEE,, vol. VOL. 2 OF 2. CONF. 9, 28 August 2003 (2003-08-28), pages 541-544, XP010660319 ISBN: 0-7803-7978-0 Section IV.: Implementation Complexity ----- | 1-13 | |
| T | EP 1 580 900 A (MITSUBISHI ELECTRIC INFORMATION TECHNOLOGY CENTRE EUROPE B.V; MITSUBIS) 28 September 2005 (2005-09-28) * paragraph [0040] - paragraph [0056]; figures 6,7 * ----- | 1,4,12, 13 | |
| A | SANGYOUB LEE: "Design and Analysis of Ultra-wide Bandwidth Impulse Radio" [Online] August 2002 (2002-08), , XP002352289 Retrieved from the Internet: URL:http://ultra.usc.edu/New_Site/papers/S angyoub_thesis.pdf> [retrieved on 2005-11-02] * page 28 - page 37 * ----- | 1,4,12, 13 | TECHNICAL FIELDS SEARCHED (IPC) |

The present search report has been drawn up for all claims

| Place of search | Date of completion of the search | Examiner |
|---|---|---|
| Berlin | 4 November 2005 | Chave, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 29 1171

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2005

| Patent document cited in search report | | Publication date | Patent family member(s) | Publication date |
|---|---|---|---|---|
| EP 1580900 | A | 28-09-2005 | NONE | |

EPO FORM P0459

For more details about this annex : see Official Journal of the European Patent Office, No. 12/82